# EUROPEAN PATENT APPLICATION

(11) **EP 2 698 714 A2**
(43) Date of publication of application: **19.02.2014**
(21) Application number: 13178441.5
(22) Date of filing: 30.07.2013
(51) Int. Cl.: G06F 9/50

(54) **A method of processing data**

(30) Priority: 08.08.2012 GB 201214184; 30.05.2013 US 201313905344
(71) Applicant: Basis Technologies International Limited, London W1K 5DB (GB)
(72) Inventor: Oliver, Craig, London, W1K 5DB (GB)
(74) Representative: Blake, Stephen James

(57) **Abstract**

A method of data processing in a data-processing system, the data-processing system comprising a memory, and a plurality of data processors, the method comprising the steps of: partitioning the or a part of the data in the memory into a plurality of data intervals, allocating a data processor one of the plurality of intervals to process, the data processor processing its allocated interval to produce a result, the data processor outputting the result and storing the result in a non-volatile memory.

## Description

### Field of the Invention

The present invention provides a method of processing data in a data processing system. It is particularly applicable to use in an SAP (RTM) system.

### Background to the Invention

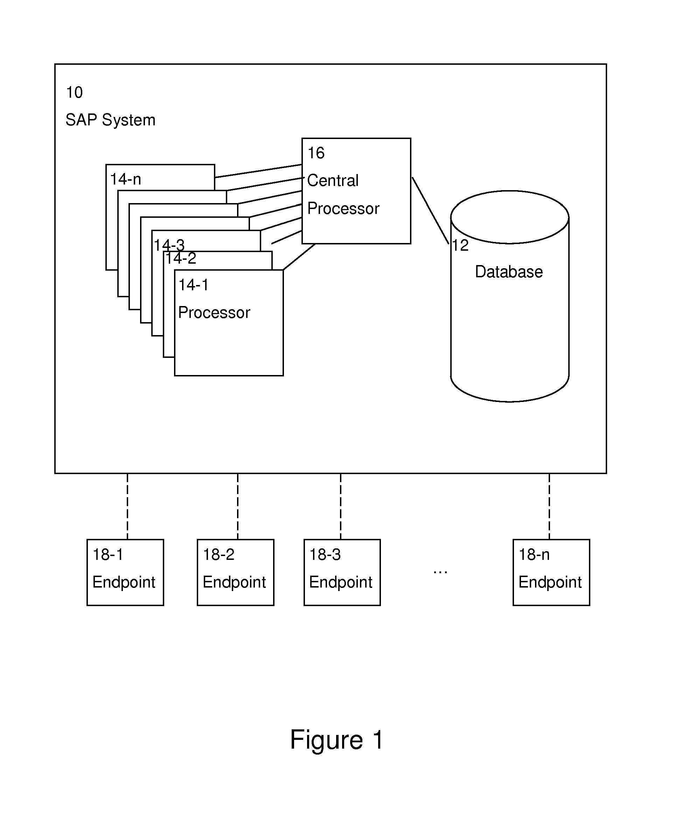

SAP (System Analysis and Program Development) (RTM) is a data processing system which is designed to enable businesses to manage their data. Figure 1 illustrates an example architecture of an SAP (RTM) system 10 which includes a single SAP (RTM) database 12, one or more application servers 14-1 to 14-n and a control server 16.

The SAP (RTM) database 12 stores all the data and the code for applications to process the data stored in that database 12. Application processors 14-1 to 14-n are designed to access the data and execute the application code present in the SAP (RTM) database 12 in response to requests received by the SAP system 10 from user endpoints 18-1 -18-n....

When a request is received from a user the control processor will allocate one or more application processors to service the request. The data to be processed is divided up according to the number of processors and each application processor will process the data in accordance with the request. This has the disadvantage that once an application processor begins to service a request they are not available for any other processes. Additionally, once an application server begins to service a request the process cannot be stopped without losing the results of any processing the application server has already undertaken.

### Summary of the Invention

In accordance with a first aspect of the present invention there is provided a method of data processing in a data processing system, the data processing system comprising a memory, and a plurality of data processors, the method comprising the steps of: partitioning the or a part of the data in the memory into a plurality of data intervals, allocating a data processor one of the plurality of intervals to process, the data processor processing its allocated interval to produce a result, the data processor outputting the result and storing the result in a non-volatile memory. By storing the output of the data processors incrementally the processing of the data can be stopped, paused and restarted without losing any intermediate results or having to restart the processing from the beginning.

The data processing system may include a central processor and the method include the step of selecting a set of the plurality of data processors to service the request and the step of allocating a data processor comprises each of the data processors in the set of data processors being allocated a data interval.

The method may include the further step of allocating the data processor a further one of the plurality of data intervals when the data processor has output the results. In this way the data processors can be provided with a stream of data until all of the data has been processed. The step of allocating a further one of the plurality of data intervals may be performed by the central framework of the data processing system, the data processor itself or any other suitable method.

The method may include the step of collating the results. This collation may occur at the end of the data processing or at any point during the data processing. Where the collation occurs before the end of the data processing the data which has been processed to that point is collated. This allows users to view intermediate results allowing them to take decisions using these intermediate results. For example, it may be decided not to finish the data processing following review of the intermediate results.

The method may include the steps of storing the collated results in a non-volatile memory in order to allow them to be retrieved at a later data. The method may further comprise the step of outputting the collated data. The collated data may be output automatically or in response to a request from a user.

The method may include the step of not allocating a further one of the plurality of intervals which has not been processed to a data processor in response to the system receiving a pause request from a user endpoint. Additionally further allocation of the intervals may restart in response to a restart request. The pause request and restart request may be, for example, from a user endpoint or automatically generated in response to a trigger. In this way the amount of processing power required by the process can be controlled.

The method may further comprise the step of generating a report. The report may be of any suitable form, for example it may be a bar chart, pie chart, time line or a table. The report preferably allows the user to readily reference and understand the output of the data processing. The type of report may be selected by the user before, after or during the processing of the data.

In accordance with a second aspect of the present invention there is provided a data processing system including a non-volatile memory and a plurality of data processors, the data processing system being configured to partition the or a part of the data in the memory into a plurality of data intervals, allocate a data processor one of the plurality of intervals to process, the data processor processing its allocated interval to produce a result, the data processor outputting the result and store the result in the non-volatile memory.

The data processing system may include a central processor, wherein the central processor is further configured to select a set of the plurality of data processors to service the request and the step of allocating a data processor comprises each of the data processors in the set of data processors being allocated a data interval.

The data processing system may also be provided with a control framework configured to allocate the data processor a further one of the plurality of data intervals upon detecting it has outputted the processed data interval.

Optionally, the control framework of the data processing system may be configured to, upon receiving a pause request, not allocate a further one of the plurality of intervals. The control framework of the data processing system may also be configured to, upon receiving a restart request, allocate a further one of the plurality of intervals.

The data processing system may be configured to collate one or more of the processed data intervals. Additionally, the data processing system may be further configured to generating a report including the collated data intervals.

### Brief Description of the Drawings

Figure 1 illustrates an SAP (RTM) implementation of a data processing system on which the invention is implemented;
Figure 2 is a flow diagram for a method of load balancing

### Detailed description of the Invention

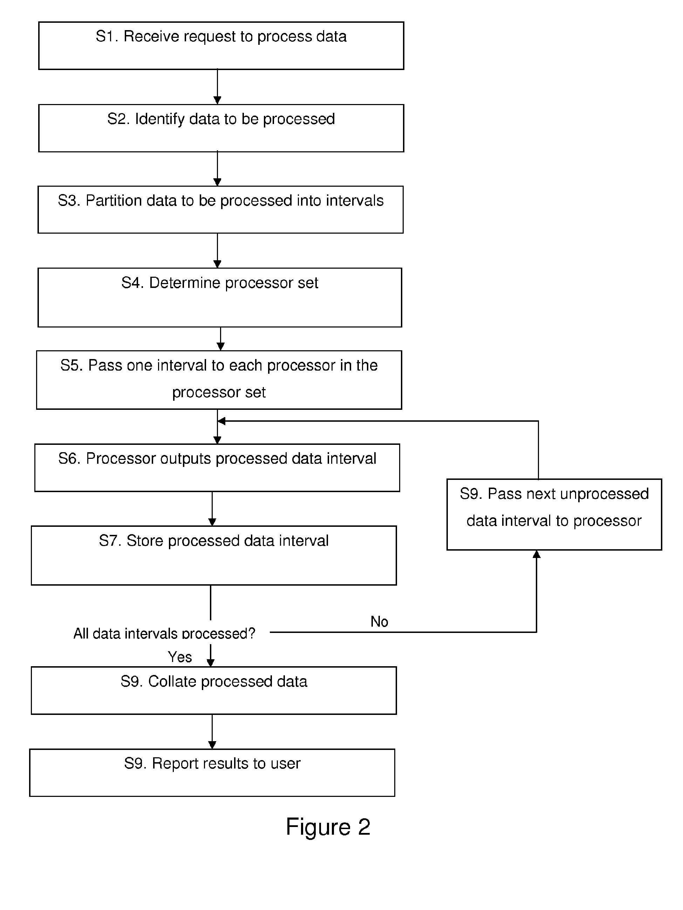

A method of data processing in an SAP (RTM) system will now be described with reference to Figure 2. The SAP (RTM) system 10 has the same architecture as that described with reference to Figure 1. Namely, it comprises a database 12, a number of processors 14-1 to 14-n and a central processor 16.

Referring to Figure 2 there is illustrated a process which is executed in the SAP (RTM) system to enable load balancing between the data processors.

In step S1 the system receives a request to process data in the database from a terminal 18 connected to the system 10. The request may be, for example, a request to query the database for data matching a set of parameters. The central processor identifies the data to be processed (S2) and causes the data to be divided up into intervals (S3). The intervals may be of any suitable size, for example, they may comprise 100 rows of data in the database. Preferably, however, the intervals are all of equal size.

Once the data has been divided into intervals in S3 the central processor determines a set of data processors to be used to process the data in response to the request (S4). Having determined the processor set and divided the data the control framework causes each data processor to be provided with a data interval in order that all of the processors in the set are provided with a different one of the plurality of intervals to process.

The control framework may use any suitable algorithm to determine the number of data processors to be used to process the data. For example, the central processor may allocate a predetermined number of data processors to each program instance or may divide up the total number of data processors between the number of program instances running in the system (so, if there are three requests being serviced there are three sets of data processors all of equal size).

Each processor processes the data in the interval to produce a result and passes the result of the processing to a memory where it is then saved. Preferably, the results are saved in an optimised format, for example it may be saved with an identifier so the results can be readily collated. The data may be stored in a database or any other suitable format. Optionally, a separate database may be set up for the results of each program instance rather than the results of every program instance being stored in a single database in the memory.

The control framework, upon determining that a processor has completed processing one interval will determine whether there are any data intervals which have not been processed. If there are unprocessed data intervals the central processor passes the next unprocessed data interval to the processor for processing. This is repeated for all the processors in the processor set until all the data is processed.

Once all the intervals have been processed i.e. all of the data has been searched for the parameters, the control framework causes the results to be collated and the collated results may be saved and/or output to a user endpoint or other program instance. Optionally, it is the data processor which determines that it is processing the final data interval and therefore collates the results and saves and/or outputs the collated results.

Saving the processed data output by the processors during the data processing stage enables processing of the data to be paused at any time as the control framework can opt not to send any further intervals to the data processors. This may be desirable, for example, if the processors being used to process the data are required to process data in response to another user request.

Additionally, because the processed data from each of the processors is stored once it is produced it is also possible to collate an incomplete set of results where only part of the data set has been analyzed.

Optionally, the system may be set up so that the load on the system is dependent on the load on the system as an entirety. For example, the central processor may be set up to ensure that the load on the data processors in the SAP (RTM) system is at or below 70%. The central processor, upon receiving a new request for data processing may determine that the set of data processors to service the request must be at or below a certain number to keep the load on the SAP system at or below 70%. Alternatively, if the load is at 70% the central processor may reallocate data processors which have a data processing task to service a new request. If a data processor is reallocated then it proceeds to fulfil the new request when it finishes processing a data interval.

Optionally, the request may include an indicator of priority. The central processor may use the indicator to determine the number of processors allocated to service the request. For example an indicator having an important priority will have a greater number of processors allocated to it than a request with a normal priority.

In another example the central processor may determine that the total number of data processors in the SAP (RTM) system has increased, for example due to a new processor being added to the system. In such an instance the central processor may increase the number of processors in one or more sets of data processors whilst keeping within the load limits in order to speed up the fulfilment of requests. Conversely, if one or more of the data processors in the SAP (RTM) system are decommissioned or unavailable the control processor may detect this and alter the total number of processors in the system and decrease the number of data processors in one or more sets of data processors accordingly.

It is also possible for a percentage processor capacity to be set at a percentage of the total processing capacity of the system and the number of processors allocated to each process to be altered in response to altered demands on the system in order to enable the load on the system to be kept constant.

As will be understood by the skilled person a user may access the system using any suitable terminal.

Additionally, rather than being initiated by a manual request from a user endpoint the processing of data may be initiated by any suitable process including, but not limited to, automated running at a predetermined time or after a predetermined time period.

The SAP (RTM) system may be implemented on processors which are collocated. Alternatively one or more of the processors may be distributed geographically at separate locations. It will be understood that the data processors may be physical processors or virtual processors.

The control framework within an SAP (RTM) system may be considered to be logic which runs on an application server and acts to control processes with the SAP system. In particular, it may control the distribution of data across the configured intervals & the allocation out to the available processors.

By way of clarification, a non-volatile or persistent memory refers to any memory which stores data until it receives a command, whether manual or otherwise, to remove that data. It may comprise, for example, a database. The use of persistent data means that in the event that there is any interruption to a process, for example, due to errors or a power outage the results of the process that have been completed up to the interruption can be wholly or substantially retrieved.

## Claims

1. A method of data processing in a data-processing system, the data-processing system comprising a memory, and a plurality of data processors, the method comprising the steps of:
partitioning the or a part of the data in the memory into a plurality of data intervals;
allocating a data processor one of the plurality of intervals to process;
the data processor processing its allocated interval to produce a result;
the data processor outputting the result; and
storing the result in a non-volatile memory.

2. The method as claimed in claim 1 wherein the data processing system further comprises a central processor and the method further comprises the step of selecting a set of the plurality of data processors to service the request and the step of allocating a data processor comprises each of the data processors in the set of data processors being allocated a data interval.

3. The method as claimed in claim 1 or claim 2 further comprising the step of allocating the data processor a further one of the plurality of data intervals when the data processor has output the processed data interval.

4. The method as claimed in any one of the preceding claims further comprising the step of collating the results.

5. The method as claimed in claim 4 further comprising the step of outputting the collated data

6. The method as claimed in claim 4 or claim 5 further comprising the step of generating a report in response to a request from a user.

7. The method as claimed in any one of claims 4 to 6 wherein the step of collating the results occurs prior to all the data intervals being processed.

8. The method as claimed in claim 3 or any one of claims 4 to 7 when dependent upon claim 3 wherein the method further comprises, receiving a pause request and, responsive to the pause request, not allocating a further one of the plurality of intervals.

9. The method as claimed in claim 8 further comprising the receiving a restart request and, responsive to the restart request, allocating a further one of the plurality of intervals.

10. A data-processing system including a non-volatile memory and a plurality of data processors configured to:
partition the or a part of the data in the memory into a plurality of data intervals;
allocate a data processor one of the plurality of intervals to process;
the data processor processing its allocated interval to produce a result;
the data processor outputting the result; and
store the result in the non-volatile memory.

11. The data-processing system as claimed in claim 10 further comprising a central processor, wherein the central processor is further configured to select a set of the plurality of data processors to service the request and the step of allocating a data processor comprises each of the data processors in the set of data processors being allocated a data interval.

12. The data-processing system as claimed in claim 10 or claim 11 further comprising a control framework wherein the control framework is configured to allocate the data processor a further one of the plurality of data intervals upon detecting it has outputted the processed data interval.

13. The data-processing system as claimed in claim 12 wherein the control framework is configured to, upon receiving a pause request from a user endpoint, not allocate a further one of the plurality of intervals.

14. The data-processing system as claimed in claim 13 wherein the control framework is configured to, upon receiving a restart request from a user endpoint, allocate a further one of the plurality of intervals.

15. The data-processing system as claimed in any one of claims 10 to 14, wherein a data processor is configured to collate one or more of the processed data intervals.

16. The data-processing system as claimed in claim 15 wherein the data-processing system further comprises an output to output the collated results.
